# EUROPEAN PATENT SPECIFICATION

(11) **EP 3 094 583 B1**
(45) Date of publication and mention of the grant of the patent: **11.07.2018**
(21) Application number: 15700855.8
(22) Date of filing: 14.01.2015
(51) Int. Cl.: B65G 47/51, B05B 5/08, B65G 49/04

(54) **AERIAL CONVEYOR**
HÄNGEFÖRDERER
CONVOYEUR AÉRIEN

(30) Priority: 15.01.2014 IT MI20140043
(43) Date of publication of application: 23.11.2016
(73) Proprietor: SAT (SURFACE ALUMINIUM TECHNOLOGIES) S.R.L., 36135 Verona (IT)
(72) Inventor: TREVISAN, Silvio Maria, I-37121 Verona (IT)
(74) Representative: Rapisardi, Mariacristina
(86) International application number: PCT/EP2015/050553
(87) International publication number: WO 2015/107062

(56) References cited:
- EP-A1- 0 168 872
- GB-A- 2 292 926
- JP-A- S58 212 516
- US-A- 3 744 449

## Description

The present invention relates to an aerial conveyor for the sequential movement of parts and is preferably but not necessarily applicable in a system for the surface treatment of longitudinal metal parts for the sequential horizontal movement of parts hanging vertically through one or more treatment stations.

A preferred but not exclusive application sector in particular is that of powder coating longitudinal parts such as extruded profiles and bars made of aluminium alloy or sections made of ferrous material.

In a coating system of the prior art, after being hooked onto the conveyor line, the profiles are subjected to a series of successive treatments including degreasing, deoxidation, washing, drying, coating with powder resins, polymerization of the resins in an oven, and final cooling before being unhooked from the conveyor line and unloaded.

In many coating systems of the prior art there is a chain conveyor that comprises a fixed guide within which a chain is moved by one or more drawing units. The chain is comprised of an alternation of load-bearing links and directional links.

Hooks are fixed to the links of the chain to which the profiles are hooked by means of relevant hangers, for example formed by steel wires.

The chain, being inextensible, moves along the fixed guide at the same speed along all the sections of the conveyor in the different treatment stations.

The main disadvantage complained of in a system that has an aerial conveyor of this type consists of the fact that a potential change to the setting of the treatment duration in one station according to the nature of the parts to be treated or other intervening requirements, obtainable by modifying the drawing speed of the chain, necessarily influences the duration of the treatment in the other stations since a variation in the drawing speed of the chain indistinctly affects all the sections of the conveyor in the same way.

The inevitable consequence for the system is a considerable limit to its flexibility of use.

EP0168872, GB2292926, JPS58212516, US3744449 disclose an aerial conveyor for the sequential movement of parts and particularly EP0168872 discloses an aerial conveyor according to the preamble of claim 1. The main technical task of the present invention is, therefore, to provide an aerial conveyor which obviates the above-described technical drawbacks of the prior art.

Within the scope of this technical task, an object of the invention is to provide an aerial conveyor that has improved adaptation flexibility to modifications to the process parameters to which the parts may be subject.

Another object of the invention is to provide an aerial conveyor that can optimize the productivity of the system in which it is installed.

The technical task, as well as these and other objects, according to the present invention, are reached by providing an aerial conveyor comprising a guide along which there is slidingly engaged a chain having hooks for hanging the parts, characterized in that it comprises means for differentiating the speed taken on by the chain in different sections of the guide, the speed differentiating means are arranged and configured so as to vary the shape of the guide, its overall length being equal, the speed differentiating means comprise a driver operating in synchronism on a first and a second guide section of variable length so as to modify the value of the length thereof by an opposite entity so as to maintain the overall length of the guide unchanged, said first and second guide sections each comprise a fixed part and a respective movable part associated with the fixed part in a telescopically extendible manner, said first and second guide sections are extendible in the same direction and in the opposite direction, said driver comprises a carriage, upon which the movable part of the first and second guide sections is mounted, and said guide comprises a sheet metal box section inside which said chain slides. The present invention further discloses a system for the surface treatment of metal parts that has such an aerial conveyor. Further characteristics and advantages of the present invention will more fully emerge from the description of a preferred but not exclusive embodiment according to the invention, illustrated by way of non-limiting example in the accompanying figures, in which:

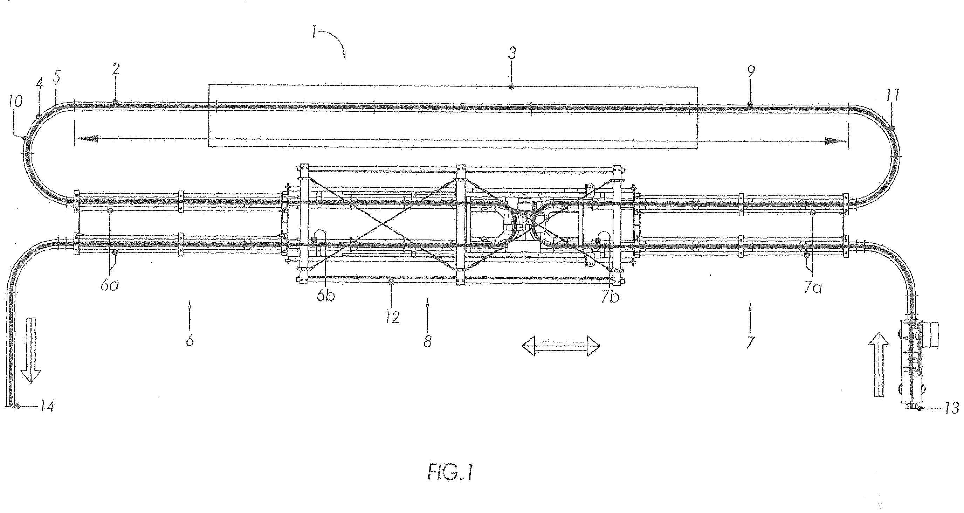

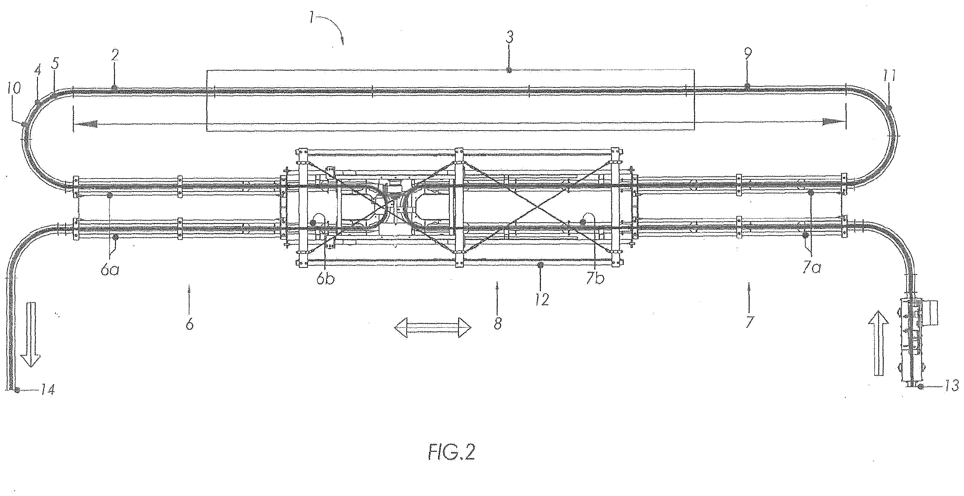

Figures 1 and 2 show a schematic plan view from above of a system that has the aerial conveyor with the carriage in two different positions.

With reference to the figures mentioned, part of a system for the surface treatment of longitudinal metal parts is shown by way of purely indicative example, indicated overall with the reference number 1.

In fact, the aerial conveyor could equally be installed in systems of a completely different type.

The system 1 includes an aerial conveyor 2 for the sequential horizontal movement of parts hanging vertically through one or more treatment stations.

The aerial conveyor 2 has a guide 4 along which along which there is slidingly engaged an inextensible chain 5 having hooks for hanging the parts.

The chain 5 is comprised of an alternation of load-bearing links and directional links.

The guide 4 comprises a sheet metal box section inside which said chain 5 slides.

The system 1 in particular may be a powder resin coating system equipped in sequence with a degreasing station, a deoxidation station, a washing station, a drying station, a coating station, a polymerization station of the resins in the oven, and a final cooling station before being unhooked from the conveyor line and unloaded.

In the section of the system visible in figures 1 and 2, just one of the treatment stations is illustrated, for example the coating station 3.

Advantageously the system 1 comprises means for differentiating the speed taken on by the chain 5 in different sections of the guide 4.

The means for differentiating the speed of the chain 5 are arranged and configured so as to vary the shape of the guide 4, its overall length being equal.

The means for differentiating the speed of the chain 5 comprise a driver 8 operating in synchronism on a first 6 and a second guide 7 section of variable length so as to modify the value of the length thereof by an opposite entity so as to maintain the overall length of the guide 4 unchanged.

The first guide section 6 comprises a fixed part 6a and a movable part 6b associated with the fixed part 6a in a telescopically extendible manner.

In particular the fixed guide part 6a has two parallel rectilinear sub parts connected to one another by the movable guide part 6b which forms a 180° loop.

Likewise the second guide section 7 comprises a fixed part 7a and a movable part 6b associated with the fixed part 7a in a telescopically extendible manner.

In particular the fixed guide part 7a has two parallel rectilinear sub parts connected to one another by the moveable guide part 7b which forms a 180° loop.

The first guide section 6 and the second guide section 7 are extendible in the same direction and in the opposite direction.

The two parallel rectilinear sub parts of the fixed guide part 7a are each arranged on the extension of a corresponding rectilinear sub part of the fixed guide part 6a, whereas the loop of the moveable guide part 7b opposes with its convex side the convex side of the loop of the moveable guide part 6b.

With reference to the advancement direction of the chain 5 indicated by the arrows in figures 1 and 2, the guide 4 further comprises a fixed guide connecting section 9, 10, 11 between the rectilinear sub part of the fixed guide part 7a downstream of the moveable guide part 7b and the rectilinear sub part of the fixed guide part 6a upstream of the moveable guide part 6b.

The fixed connecting section 9, 10, 11 comprises in turn a rectilinear part 9 parallel to the fixed guide parts 6a and 7a, a part 10 that forms a 180° loop for connecting the rectilinear part 9 to the fixed guide part 6a, and a part 11 that forms a 180° loop for connecting the rectilinear part 9 to the fixed guide part 7a.

The driver 8 comprises a carriage 12 on which the moveable part 6b of the first guide section 6 and the moveable part 7b of the second guide section 7 are assembled in a fixed way.

The carriage 12 is translatable in the extension and contraction direction of the first guide section 6 and of the second guide section 7. For that purpose relevant means are provided for moving the carriage 12 at a variable speed.

The operation of the system is briefly as follows.

Still with reference to the advancement direction of the chain 5 indicated by the arrows in figures 1 and 2, 13 indicates the fixed section of the guide 4 upstream of the guide section 7, and 14 indicates the fixed section of the guide 4 downstream of the guide section 6.

Thanks to the translation of the moveable carriage 12 at a variable speed (the movement direction is indicated with a two-directional arrow in figures 1 and 2), it is possible to arrange a different chain 5 speed between the guide sections 13/14 and the guide section 9 where the coating station 3 is present. In fact, the translation of the carriage 12 which modifies the length of the guide sections 6, 7 allows the following operation.

From the guide section 13 it reaches chain 5 at speed V1 towards the chain section 7a. The carriage 12 moves from right to left by extending the guide section 7 by a certain entity and shorting the guide section 6 by the same entity. This determines a lower speed V2 of the chain 5 in the guide section 9 and equal to the difference between speed V1 and two times the speed VC of the carriage 12 (this is because there are two parallel extendible guide sections). From the guide section 14 onwards the chain 5 continues at speed V3, the same as V1, since the guide section 6 is shortened as mentioned by the same entity as the extension of the guide section 7.

An exemplificative case is described below.

The speed V1 of the chain 5 in the guide section 13 is equal to 1 m/min.

The carriage 12 moves with speed VC equal to 0.5 m/min moving from right to left.

The length of the guide section 7 increases at the speed of 0.5x2=1 m/min.

At the guide section 9 speed V2 is null being equal to V1-2xVC: therefore, in the case of this example the chain 5 does not arrive at the guide section 9 and therefore the chain 5 in the guide section 9 is stationary.

Downstream of the guide section 6 the speed V3 is equal to V1 being equal to V2+2VC.

More generally, for a time equal to the stroke of the moveable carriage 12, if the carriage 12 moves from right to left it will be possible to reduce the speed of the chain 5 in the guide section 9 without modifying the speed of the chain in guide sections 13 and 14.

For the same reason, for a time equal to the stroke of the moveable carriage 12, if the carriage 12 moves from left to right it will be possible to increase the speed of the chain 5 in the guide section 9 without modifying the speed of the chain in guide sections 13 and 14.

Obviously to be able to return to the initial conditions and therefore be able to repeat this procedure, the moveable carriage 12 must perform an opposite translation to the previous one and therefore the speed of the chain 5 along the guide section 9 must also undergo an opposite variation to the previous one.

The advantages and possible applications of this variable speed conveying system are numerous and some are mentioned by way of non-limiting example.

If, as in the case described, the guide section 9 crosses a coating station, a section of chain 5 appropriately free from hanging parts can be kept stationary inside the coating station until the inside of the coating station has been cleaned, for example, in preparation for a colour change. Therefore, if the length of the section of the chain 5 inside the coating station is 5 m and the colour change time is 10 minutes, a colour change, with speed V1 and V3 of the chain 5 equal to 1m/min will require an empty chain section of just 5 m compared to the 10 m required by a totally fixed configuration guide. In particular the moveable carriage 12 will translate by 2.5 m at the speed of 0.5 m/min for 5 minutes.

In this case in the rest of the system 1, therefore in the other treatment stations with the exception of the coating station, the chain 5 proceeds at constant speed without influencing the duration of the treatments. Consequently the work conditions of the workers employed to load and unload the parts from the aerial conveyor 2 are not varied either.

In another application it may be necessary to vary the duration of the treatment according to batches of different part types. In such circumstances it may be decided to slow down or accelerate the chain locally to increase or decrease the duration of a specific treatment according to the part batch in a specific treatment station without influencing the duration of the treatments in the remaining treatment stations of the system.

## Claims

1. An aerial conveyor (2) for the sequential movement of parts, comprising a guide (4), along which there is slidingly engaged a chain (5) having hooks for hanging the parts, comprising means for differentiating the speed taken on by the chain (5) in different sections of the guide (4), wherein said speed differentiating means are arranged and configured so as to vary the shape of said guide (4), the overall length of said guide (4) being equal, said speed differentiating means comprise a driver (8) operating in synchronism on a first and a second guide section (6, 7) of variable length so as to modify the value of the length thereof by an opposite entity so as to maintain the overall length of said guide (4) unchanged, **characterized in that**, said first and second guide sections (6, 7) each comprise a fixed part (6a, 7a) and a respective movable part (6b, 7b) associated with the fixed part (6a, 7a) in a telescopically extendible manner, said first and second guide sections (6, 7) are extendible in the same direction and in the opposite direction, said driver (8) comprises a carriage (12), upon which the movable part (6b, 7b) of said first and second guide sections (6, 7) is mounted, and said guide (4) comprises a sheet metal box section inside which said chain (5) slides.

2. The aerial conveyor (2) according to the preceding claim, **characterized in that** said carriage (12) is translatable in the direction of extension of said first and second guide sections (6, 7).

3. The aerial conveyor (2) according to any one of claims 1 and 2 , **characterized in that** the movable part (6b) of said first guide section (6) defines a loop opposing a loop defined by the movable part (7b) of said second guide section (7).

4. The aerial conveyor (2) according to any one of claims 1 to 3 , **characterized in that** it has means of moving said carriage (12) at a variable speed.

5. A system for the surface treatment of metal parts, **characterized in that** it has an aerial conveyor (2) for parts in accordance with any one of the preceding claims.

## Patentansprüche

1. Hängeförderer (2) für die fortlaufende Bewegung von Teilen, umfassend eine Führung (4), entlang derer verschiebbar eine Kette (5) im Eingriff ist, aufweisend Haken zum Aufhängen der Teile, umfassend Mittel zum Differenzieren der von der Kette (5) in verschiedenen Abschnitten der Führung (4) eingenommenen Geschwindigkeit, wobei diese Mittel zum Differenzieren der Geschwindigkeit angeordnet und ausgelegt sind, um die Form der Führung (4) zu variieren, wobei die Gesamtlänge der Führung (4) gleich bleibt, wobei diese Mittel zum Differenzieren der Geschwindigkeit einen Antrieb (8) umfassen, der synchron auf einem ersten und einem zweiten Führungsabschnitt (6, 7) variabler Länge arbeitet, sodass der Wert dessen Länge durch eine entgegengesetzte Größe geändert wird, sodass die Gesamtlänge der Führung (4) unverändert aufrechterhalten wird, **dadurch gekennzeichnet, dass** der erste und der zweite Führungsabschnitt (6, 7) jeweils einen ortsfesten Teil (6a, 7a) und einen jeweiligen beweglichen Teil (6b, 7b) umfassen, assoziiert mit dem ortsfesten Teil (6a, 7a) auf eine teleskopisch ausziehbare Weise, wobei der erste und der zweite Führungsabschnitt (6, 7) in dieselbe Richtung und in die entgegengesetzte Richtung ausdehnbar sind, wobei der Antrieb (8) einen Wagen (12) umfasst, auf dem der bewegliche Teil (6b, 7b) des ersten und des zweiten Führungsabschnitts (6, 7) montiert ist und die Führung (4) einen Metallblechkastenabschnitt umfasst, in dem die Kette (5) gleitet.

2. Hängeförderer (2) nach dem vorhergehenden Anspruch, **dadurch gekennzeichnet, dass** der Wagen (12) in die Ausdehnungsrichtung des ersten und des zweiten Führungsabschnitts (6, 7) verfahrbar ist.

3. Hängeförderer (2) nach einem der Ansprüche 1 und 2, **dadurch gekennzeichnet, dass** der bewegbare Teil (6b) des ersten Führungsabschnitts (6) eine Schleife definiert, die einer Schleife entgegenwirkt, die durch den bewegbaren Teil (7b) des zweiten Führungsabschnitts (7) definiert ist.

4. Hängeförderer (2) nach einem der Ansprüche 1 bis 3, **dadurch gekennzeichnet, dass** er Mittel zum Bewegen des Wagens (12) bei einer variablen Geschwindigkeit aufweist.

5. System für die Oberflächenbehandlung von Metallteilen, **dadurch gekennzeichnet, dass** es einen Hängeförderer (2) für Teile nach einem der vorhergehenden Ansprüche umfasst.

## Revendications

1. Convoyeur aérien (2) destiné au déplacement séquentiel de pièces, comprenant un guide (4) le long duquel se trouve mise en prise de façon coulissante une chaîne (5) comportant des crochets pour suspendre les pièces, comprenant des moyens servant à différencier la vitesse prise par la chaîne (5) dans des sections différentes du guide (4), dans lequel lesdits moyens de différentiation de vitesse sont disposés et configurés de manière à varier la forme dudit guide (4), la longueur totale dudit guide (4) étant égale, lesdits moyens de différentiation de vitesse comprennent un actionnement (8) fonctionnant de façon synchronisée sur une première et une seconde section (6, 7) de guide de longueur variable de manière à modifier la valeur de sa longueur par une entité opposée de manière à maintenir inchangée la longueur totale dudit guide (4), **caractérisé en ce que** lesdites première et seconde sections (6, 7) de guide comprennent chacune une partie fixe (6a, 7a) et une partie mobile respective (6b, 7b) associée à la partie fixe (6a, 7a) de façon téléscopiquement extensible, lesdites première et seconde sections (6, 7) de guide sont extensibles dans la même direction et dans la direction opposée, ledit actionnement (8) comprend un chariot (12) sur lequel la partie mobile (6b, 7b) desdites première et seconde sections (6, 7) de guide est montée, et ledit guide (4) comprend un caisson en tôle à l'intérieur duquel coulisse ladite chaîne (5).

2. Convoyeur aérien (2) selon la revendication précédente, **caractérisé en ce que** ledit chariot (12) peut translater dans la direction d'extension desdites première et seconde sections (6, 7) de guide.

3. Convoyeur aérien (2) selon l'une quelconque des revendications 1 et 2, **caractérisé en ce que** la partie mobile (6b) de ladite première section (6) de guide définit une boucle s'opposant à une boucle définie par la partie mobile (7b) de ladite seconde section (7) de guide.

4. Convoyeur aérien (2) selon l'une quelconque des revendications de 1 à 3, **caractérisé en ce qu'**il comprend des moyens servant à déplacer ledit chariot (12) à une vitesse variable.

5. Système pour le traitement de surface de pièces métalliques, **caractérisé en ce qu'**il comporte un convoyeur aérien (2) pour des pièces selon l'une quelconque des revendications précédentes.
